# EUROPEAN PATENT APPLICATION

(11) **EP 4 285 716 A1**
(43) Date of publication of application: **06.12.2023**
(21) Application number: 22176812.0
(22) Date of filing: 01.06.2022
(51) Int. Cl.: A01K 29/00, A01K 61/80

(54) **PROCESS AND DEVICE FOR DELIVERING QUANTITY-ADJUSTED FEED TO AN AQUACULTURE SYSTEM**

(71) Applicant: Blue Planet Ecosystems GmbH, 2700 Wiener Neustadt (AT)
(72) Inventor: Schmitzberger, Paul, 2700 Wiener Neustadt (AT); Schmitzberger, Georg, 2700 Wiener Neustadt (AT); Deterre, Cécile, 2700 Wiener Neustadt (AT)
(74) Representative: Schwarz & Partner Patentanwälte GmbH

(57) **Abstract**

A computer-implemented process for delivering quantity-adjusted feed to fish (6, 7) in an aquaculture system (1) comprises:
capturing image data of the aquaculture system,
analyzing the breathing rate of the fish in the aquaculture system and the behavior of the fish before and during the feeding based on the captured image data,
calculating the quantity of feed to be delivered based on the breathing rate of the fish in the aquaculture system and the behavior of the fish before and during the feeding,
and delivering the calculated quantity of feed to the aquaculture system.

This process is carried out in a feeding device (10), comprising cameras (12, 13), a feed delivery system (20), and a computer unit (11) designed to receive image data of the aquaculture system captured by the camera (12, 13) and to control the feed delivery system (20) to deliver quantity-adjusted feed (22) rations.

## Description

The present invention relates to a process for delivering quantity-adjusted feed to fish in an aquaculture system.

The present invention further relates to a device for delivering quantity-adjusted feed to fish in an aquaculture system, an aquaculture system equipped with such a device, a computer program product, comprising instructions causing the feeding device according to any one of claims 10 to 13 carrying out the process for delivering quantity-adjusted feed to fish, a computer readable storage medium on which the computer program is stored, and a data carrier signal transmitting the computer program of the computer program product.

There are many types of pellet feeding machines on the market that are used in recirculating aquaculture systems, aquariums and other commercial feeding operations such as poultry rearing. Most of these use mechanical or electronic dosing systems that are triggered based on
- timers
- manual inputs
- feeding programs

In these cases, feeding quantities and intervals are determined by pre-set values that are disconnected from the current biological and chemical state of the system. This is by far not the best solution and can lead in the best case to non-optimal feeding quantities and in the worst case to serious consequences for animal health.

The feeding operations for fish in aquaculture systems is one of the most critical processes. As the metabolic requirements for oxygen increases significantly after a feeding has occurred, dissolved oxygen levels in fish tanks, ponds and aquariums can fall significantly. In combination with other water quality parameters such as pH, temperature, or ammonium, such a drop in oxygen induced by feeding operations can result in i.) poor fish growth, ii.) feed wastage iii.) fish death. Besides the negative impact on animal health, fish feed is one of the main cost drivers. A poor management of the ideal feeding quantities leads to high operational costs and potential bankruptcy of fish farmers. Current feeding systems do not take these factors into account or use physical sensors that make feeding systems prohibitively expensive or complicated to operate (reliable dissolved oxygen probes designed for continuous operations cost more than EUR 1,000).

There is currently no way to reliably trigger a feeding sequence based on quantifiable biological behavior of the animal/group of animals.

Compared to alternate forms of animal husbandry (rearing of pork, poultry, cattle for dairy/meat), growing fish in land-based Recirculating Aquaculture Systems (RAS) is considered to be significantly more challenging. Fish farming and recirculating aquaculture in particular are generally more critically dependent upon expert management and precise activity than are other forms of farming. Thus, it is unlikely that a farmer with "average" management skills would be successful in RAS fish farming.

The lack of control in current feeding systems causes mismanagement in fish farming operations which can lead to unnecessary pain, disease and suffering for fish. Feeding in particular is the most critical aspect of farm management, since it conditions the productivity of the farm but also the water quality and proper functioning of the system. Quantities of food that are not appropriate for the fish species, the system itself and the current conditions can cause severe issues.

Therefore, improved processes and devices for delivering quantity-adjusted feed to fish in an aquaculture system are needed that address at least some of the above-mentioned drawbacks of existing systems. Particularly, processes and devices for delivering quantity-adjusted feed to fish in an aquaculture system are needed that are reliable, easy to manage and preferably automatically operated, cost effective, and have positive results on the health of animals in the aquaculture system.

The present invention solves these problems by providing a process for delivering quantity-adjusted feed to fish in an aquaculture system, comprising the steps of:
capturing image data of the aquaculture system,
analyzing the breathing rate of the fish in the aquaculture system and the behavior of the fish before and during the feeding based on the captured image data of the aquaculture system, calculating the quantity of feed to be delivered to the aquaculture system based on the breathing rate of the fish in the aquaculture system and the behavior of the fish before and during the feeding,
and delivering the calculated quantity of feed to the aquaculture system.

Analyzing the breathing rate of the fish in the aquaculture system is done by inspecting the rate of opening and closing the mouth of the fish or inspecting lip movements of the fish. Alternatively, or additionally, analyzing the breathing rate of the fish in the aquaculture system is done by inspecting the gills movements.

While lack of control in current feeding systems causes mismanagement in fish farming operations which can lead to unnecessary pain, disease and suffering for fish, the present invention provides highly reliable management of feeding, which is the most critical aspect of the farm management. The invention guarantees that the quantities of food delivered to the aquaculture system are appropriate for the fish species and the aquasystem itself. The present invention can alleviate the most drastic effects of farm mismanagement by taking critical decisions based on data and fish behavior, and thus making the most critical operation in animal husbandry, feeding, very reliable.

The calculated quantity of feed can be delivered to the aquaculture system by adjusting a variable feed delivery rate per time unit or by adjusting a variable delivery period or an interval between delivery periods at a constant feed delivery rate. For instance, when a feed delivery system used in the invention comprises a dosing screw that can only be rotated at a constant rotational speed then the time period during which the dosing screw is rotated or the intervals at which the dosing screw is rotated for a fixed time period define the amount of feed delivered in a given time unit, e.g., delivered per day. However, when the rotational speed of the dosing screw is adjustable, the amount of feed delivered to the aquaculture system can be adjusted by adjusting the rotational speed of the dosing screw.

In an embodiment of the invention a basic daily quantity of feed delivered to the aquaculture system is set, which daily amount of feed is a constant amount or, preferably, an amount set to increase with the growth of the fish in the aquaculture system. This basic daily quantity of feed is adjusted in accordance with the calculation of the quantity of feed to be delivered to the aquaculture system based on the breathing rate of the fish in the aquaculture system and the behavior of the fish before and during the feeding.

For instance, an amount of feed fed to fish in the aquaculture system is increased regularly to obtain the best possible growth. In the last few weeks of the growth period, the amount should increase by around 1% per day. It is however very important to adjust this quantity to the state of the system and the behavior of the fish. In the final growth stage, the aquaculture system can be very stressed and some failures could impact the whole production. Since the performance of the aquaculture system relies heavily on the quantity that is fed to the fish, it is a crucial parameter to adjust this quantity in real time. In the exemplary embodiment of the invention, the process that defines the quantity to feed assumes by default that the quantity is increased by a fixed amount from the quantity fed on the previous day. This fixed amount depends on the growth stage of the fish. As mentioned earlier, it can be assumed to be around 1% at the end of the growth period. However, two factors can change this feeding amount. The first factor is the breathing rate of the fish, which is analyzed by computer-implemented visualization. The second factor is the behavior of the fish before and during the feeding. Both factors will be explained in more detail below.

The breathing rate of the fish is assumed to be a good indicator of the water quality. One of the factors determining the water quality is the oxygen dissolved in the aquaculture system, but water quality is, among others, also impacted by ammonia in the water or the pH value of the water. While the following description focuses on the oxygen dissolved in the water of the tank the explanations also hold for other factors determining the water quality of the aquaculture system. It is important to monitor if the available oxygen in the tank is enough to sustain the fish metabolism after feeding. If this is not the case, the feeding quantity should be reduced. If this indicator shows a critical level of oxygen, the feedings should be even suspended and optionally an intervention will be triggered. Thus, a preferred embodiment of the invention suggests that if the breathing rate of the fish in the aquaculture system increases above a first threshold breathing rate the quantity of feed will be reduced, and if the breathing rate of the fish falls below a second threshold breathing rate which is lower than the first threshold feeding will be suspended, wherein preferably the first and second threshold rate are determined separately for all fish species in the aquaculture system.

The first threshold breathing rate is the indicator that there is not enough oxygen available to sustain the fish metabolism after feeding. The second threshold breathing rate is an indicator that a level of available oxygen has dropped below a critical level that requires suspending feeding and optionally triggering an intervention. This triggering can be sending a warning message to an operator or starting an automatic technical intervention, such as blowing oxygen or air into the water, reducing the water temperature, etc.

In a variant of this embodiment of the invention the quantity of feed will be reduced if the breathing rate of the fish in the aquaculture system increases above the first threshold breathing rate for a first time period, and feeding will be suspended if the breathing rate of the fish in the aquaculture system falls below the second threshold breathing rate for a second time period. Considering the first time period and the second time period provides some kind of hysteresis that makes the system less "nervous" in regard to reacting to changing oxygen concentrations in the aquaculture system.

It should be noted that estimating the oxygen in the aquaculture system available for the fish metabolism after feeding by inspecting the breathing rate of the fish implicitly also analyses other water parameters that have an influence on the breathing rate and therefore goes beyond simply measuring the oxygen with oxygen probes. Nevertheless, it makes sense that the measuring results of oxygen sensors or ammonia sensors or pH sensors are used for cross-checking. Therefore, in another embodiment of the invention it is suggested that at least one of the dissolved oxygen in the aquaculture system or the ammonia in the water or the pH value of the water is measured, and the measuring results are used in combination with the analyzed breathing rates for calculating the quantity of feed to be delivered to the aquaculture system. It should be noted that in contrast to the expensive oxygen probes mentioned above a cheap oxygen sensor will be sufficient for carrying out cross-checking.

In another embodiment of the invention the water quality is estimated by using computer vision, wherein preferably the estimated water quality is used in combination with the analyzed breathing rates for calculating the quantity of feed to be delivered to the aquaculture system. Estimating the water quality by using computer vision may comprise analyzing at least one of the visibility of the water and the color of the water, or counting or determining floating particles in the water. Computer vision is based on the captured image data of the aquaculture system.

In summary, according to the invention oxygen availability is estimated based on the breathing frequency of the fish which is measured using computer vision. A normal breathing frequency range can be determined for all fish species. If the concentration of dissolved oxygen in the tank is too low, the breathing frequency will increase significantly. If the oxygen concentration stays too low for an extended period of time, or goes down further, the breathing frequency will actually decrease below the normal range, as the fish try to save their energy. E.g., any deviation from the normal range by more than two standard deviations will thus be used as a trigger to decrease the feeding quantity. If the deviation is more than three standard deviations, the feedings will be suspended and an intervention triggered.

In a preferred embodiment of the invention analyzing the behavior of the fish comprises at least one of counting the number of fish in a feeding region of the aquaculture system, determining the velocity of the fish, and determining a mean distance between all fish, wherein an increase of the number of fish in the feeding region and an increase in velocity of the fish and a decrease of the mean distance between all fish is considered as an indication to increase the quantity of feed to be delivered to the aquaculture system, and vice versa. In a variant of this embodiment at least two of the counting the number of fish in a feeding region of the aquaculture system, the determining the velocity of the fish, and the determining a mean distance between all fish are used as a combined indicator for the quantity of feed to be delivered to the aquaculture system, wherein each of said parameters is monitored individually.

A practical example of said embodiments of the invention, wherein the behavior of the fish during and after the feedings is used as a feeding response indicator comprises counting the number of fish observed in the feeding region, their velocity and a "flocking index". The flocking index is defined as the mean distance between all the animals. It should decrease when fish are all grouped together in events such as feedings. The velocity and the number of fish detected in the feeding region should increase during feedings. A baseline for all these parameters can be determined depending on the system configuration, camera placement and the fish species. The evolution of these parameters is monitored during feedings. If the flocking index increases before the end of the feeding, this means the fish are satiated. The same logic applies to the other parameters. Each parameter is monitored individually, and a global indicator is defined from the velocity, count and flocking index for further analysis and visualization purposes. If two of the individual parameters show that the fish lost interest during the feeding, the quantity is reduced as explained above. If the parameters do not return to the baseline range within a reasonable time, the quantity fed will be increased by more than 1% on the next day.

Because every aquaculture system displays unique characteristics based on external factors such as water quality, the makeup of the microbiome, water source and characteristics, fish species and traits, it is preferred that the process according to the invention is a self-learning process automatically adapting to environment and setup of the aquaculture system based on previously tagged image data of the aquaculture system and/or on previous analyses and classification of the breathing rate of the fish in the aquaculture system and the behavior of the fish before and during the feeding.

More specifically, the training could be based on reinforcement learning with a reward function defined for the particular species and configuration of the camera. The gradual adjustments to the feeding quantities will be derived from the training and used as fixed values in the system.

The process according to the invention is a computer-implemented process. It is carried out in a feeding device for fish in an aquaculture system, comprising at least one digital camera, a feed delivery system, and a computer unit designed to receive image data of the aquaculture system captured by the camera and to control the feed delivery system to deliver quantity-adjusted feed rations, wherein the computer unit is adapted to carry out the steps of the process according to the invention as described above.

In one embodiment of the feeding device the digital camera is an underwater camera, or a camera placed in a translucent water-tight housing or behind a viewing window of a wall of the aquaculture system.

Preferably, the feed delivery system is a pneumatic feed delivery system.

Further, an embodiment of the feeding device comprises at least one sensor for measuring the dissolved oxygen in the aquaculture system, wherein the sensor is configured to transmit the measured oxygen values to the computer unit.

The present invention also comprises an aquaculture system, with a feeding device according to the invention and a tank filled with water for growing fish. In one embodiment of the invention, the aquaculture system is a closed system, in which free gas exchange with the environment is prevented. In an alternative embodiment of the invention, the aquaculture system is an open system with free gas exchange with the environment.

The present invention further comprises a computer program product, comprising instructions causing the feeding device according to the invention carrying out the inventive process. The computer program product may be stored on a computer readable storage medium. A data carrier signal may be provided transmitting the computer program of the computer program product. This data carrier signal may be used for distributing the computer program product and for installing or updating the computer program on computer units of the feeding device according to the invention.

The present invention is further explained by exemplary embodiments, without being limited to them, illustrated by the drawings, wherein
Fig. 1 schematically shows an aquaculture system equipped with a feeding device in accordance with the present invention;
Fig. 2 shows a detail B of Fig. 1 depicting the feed delivery system of the present invention; and
Fig. 3 schematically shows another embodiment of an aquaculture system equipped with a feeding device in accordance with the present invention.

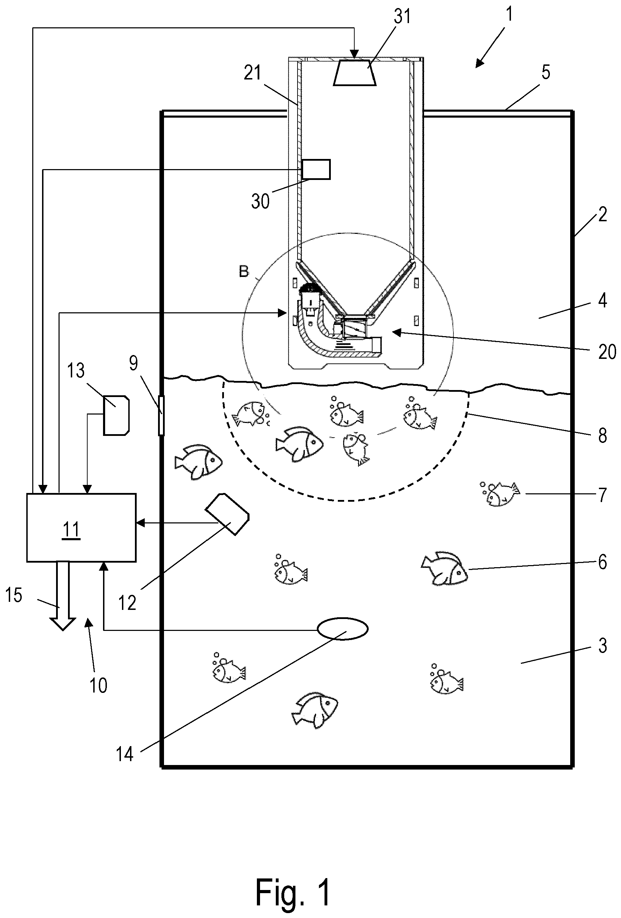

First, reference is made to Fig. 1 which schematically shows an aquaculture system 1 equipped with a feeding device 10 in accordance with the present invention. The aquaculture system 1 comprises a tank 2 partially filled with clean water 3. The aquaculture system 1 can be designed as an open system or as a closed system, in which free gas exchange with the environment is prevented. In the latter case the tank 2 comprises a closure 5 that hermetically seals the air 4 in the tank from gas exchange with the environment. Different species of fish 6, 7 are grown in the tank. The wall of the tank comprises at least one viewing window 9 for inspection of the interior of the tank by operators and/or for placing a camera 13 for continuously capturing digital photos or video sequences.

The core of the invention is a feeding device 10 for feeding the fish 6, 7 in the aquaculture system 1. This feeding device 10 comprises at least one digital camera, such as the mentioned camera 13 placed at the viewing window 9 outside of the tank 2. In this exemplary embodiment of the invention a second digital camera 12 is positioned in the water 3 of the tank 2. This second camera is configured as an underwater camera and its viewing angle is directed at a feeding zone 8. The feeding zone 8 is a region in the water 3 close below its surface where the feed is delivered to by a feed delivery system 20 comprising a feed reservoir 21 and feed conveying means that will be described in detail below. In the drawing, the feeding zone 8 is depicted as a confined area. It should be borne in mind, however, that the feeding zone 8 might be the whole water surface to maximize fish access to the feed. The feeding device 10 further comprises a computer unit 11 designed to receive image data from the interior of the aquaculture system 1 captured by the cameras 12, 13. In this embodiment of the invention an optional oxygen sensor 14 is positioned in the water 3. The oxygen sensor 14 measures the oxygen dissolved in the water and transmits the measured oxygen values to the computer unit 11. The computer unit 10 may be chosen from standard computers available on the market. However, in terms of costs, size, energy consumption and reliability it is preferred to use a single-board computer specifically designed to meet the needs of the invention leaving away all components of standard computers that are not necessary for carrying out the inventive process. The computer unit 10 comprises a central processing unit, a non-volatile program memory, a data memory, interfaces to communicate with the cameras 12, 13, the oxygen sensor 14 and the feed delivery system 20. The computer unit 10 further comprises standard communication interfaces such as USB, LAN, WLAN, Bluetooth and others for data input and output, a keyboard connector, and a display connector. The computer unit 11 is designed to control the feed delivery system 20 to deliver quantity-adjusted feed rations by carrying out the steps of the process that has been explained above. This process runs on the computer unit 11 as a computer program carrying out all steps of the process. The program can be loaded on the computer unit either by connecting a computer readable storage medium on which the computer program is stored, or by receiving a data carrier signal from one of the above-mentioned communication interfaces, the data carrier signal transmitting the computer program of the computer program. The computer unit 11 is also designed to send a trigger signal 15 if the dissolved oxygen in the water 3 of tank 2 falls below a critical level.

Optionally, the feed delivery system 20 can be provided with a temperature/humidity sensor 30 for measuring the temperature and/or humidity in the feed reservoir 21, and a thermoelectric cooling/dehumidifying element 31 for cooling and/or dehumidifying the interior space of the feed reservoir. The thermoelectric cooling/dehumidifying element 31 is controlled by the computer unit 11 in dependency of the measure values received from the temperature/humidity sensor 30. Such an embodiment provides the advantage that the stored feed is kept cool and dry, preventing it from becoming spoiled, because lack of cooling or changing temperatures and excess humidity can cause feed to spoil.

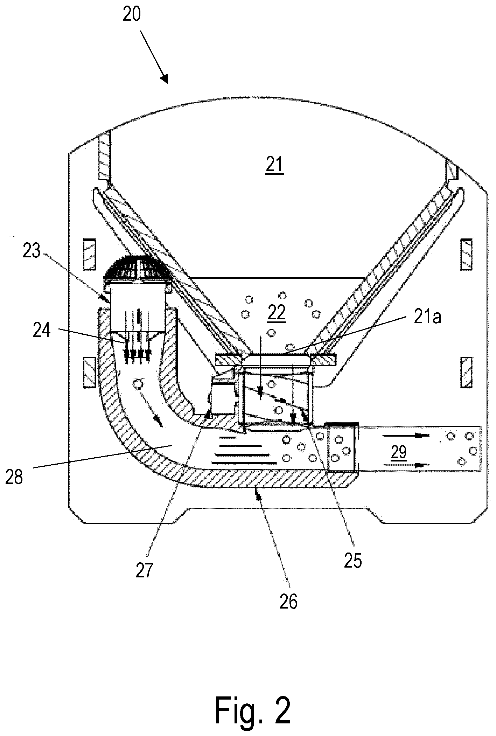

With reference to Fig. 2 a preferred embodiment of the feed delivery system 20 will now be explained. It comprises a feed reservoir 21 containing feed 22, an impeller 23 that generates an airflow 24 through a duct of the housing 26, and a dosing screw 25 positioned under an outlet opening 21a of the feed reservoir 21. The dosing screw 25 is rotated by a motor and gear means 27 and conveys the feed 22 into the duct 28, where it merges with the airflow 21 to a combined feed and air flow 29 that is spread over the feeding zone 8 (see Fig. 1). The computer unit 11 controls the amount of feed 22 delivered by the feed delivery system 20 by adjusting the rotational speed of the impeller 23 and the rotational speed of the dosing screw 25 by controlling the motor and gear means 27, or by adjusting the duration of rotating the impeller 23 and the dosing screw 25.

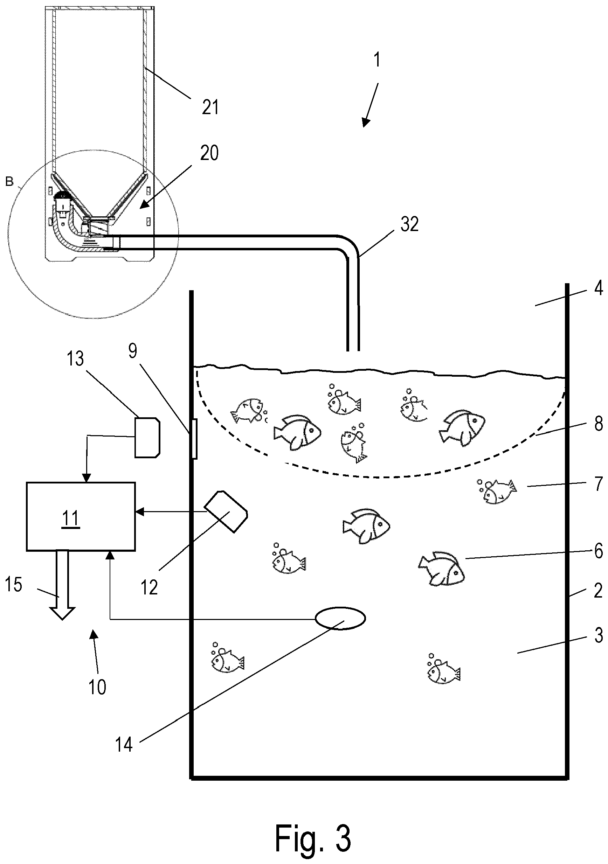

Fig. 3 schematically shows another embodiment of an aquaculture system 1 equipped with a feeding device 10 in accordance with the present invention. This second embodiment of the aquaculture system 1 differs from the first embodiment depicted in Fig. 1 only in that it is configured as an open system with the air 4 in the tank 2 being in direct air exchange with the environment, that the feeding zone 8 covers the entire surface of the water 3, and that the feed delivery system 20 is placed outside of the tank 2. The feed delivery system 20 has a pneumatic pipe 32 connected with one end to the exit of the feed delivery system 20 allowing the feed to be pneumatically transported from the feed reservoir 21 through the pneumatic pipe 32. The open end of the pneumatic pipe 32 reaches into the tank 2, enabling the feed to be poured or blown into the water 3. In order to enable equal distribution of feed across the feeding zone 8, the open end of the pneumatic pipe 32 could be equipped with nozzles or the like. Configuring the pipe 32 as a pneumatic pipe allows to place the feed delivery system 20 relatively far away from the tank 2, for instance up to twenty meters away from the tank. It also allows to position the feed delivery system 20 below the surface level of the water 3.

Like or similar parts, features, and elements of the aquaculture systems of Fig. 1 and Fig. 3 are depicted with the same numerals and have the same or similar functions. Therefore, to avoid repetition it is not necessary to describe the aquaculture system of Fig. 3 in full detail, but it is sufficient to refer to the above description and explanations regarding the aquaculture system of Fig. 1.

## Claims

1. A process for delivering quantity-adjusted feed to fish (6, 7) in an aquaculture system (1), **characterized by** the steps of:
capturing image data of the aquaculture system,
analyzing the breathing rate of the fish in the aquaculture system and the behavior of the fish before and during the feeding based on the captured image data of the aquaculture system,
calculating the quantity of feed to be delivered to the aquaculture system based on the breathing rate of the fish in the aquaculture system and the behavior of the fish before and during the feeding,
and delivering the calculated quantity of feed to the aquaculture system.

2. The process according to claim 1, **characterized in that** the calculated quantity of feed is delivered by adjusting a variable feed delivery rate per time unit or by adjusting a variable delivery period or an interval between delivery periods at a constant feed delivery rate.

3. The process according to claim 1 or 2, **characterized in that** a basic daily quantity of feed delivered to the aquaculture system is set, which daily amount of feed is a constant amount or, preferably, an amount set to increase with the growth of the fish in the aquaculture system, wherein this basic daily quantity of feed is adjusted in accordance with the calculation of the quantity of feed to be delivered to the aquaculture system based on the breathing rate of the fish in the aquaculture system and the behavior of the fish before and during the feeding.

4. The process according to any one of the preceding claims, **characterized in that** if the breathing rate of the fish in the aquaculture system increases above a first threshold breathing rate the quantity of feed will be reduced, and if the breathing rate of the fish falls below a second threshold breathing rate which is lower than the first threshold feeding will be suspended, wherein preferably the first and second threshold rate are determined separately for all fish species in the aquaculture system.

5. The process according to claim 4, **characterized in that** the quantity of feed will be reduced if the breathing rate of the fish in the aquaculture system increases above the first threshold breathing rate for a first time period, and feeding will be suspended if the breathing rate of the fish in the aquaculture system falls below the second threshold breathing rate for a second time period.

6. The process according to any one of the preceding claims, **characterized in that** at least one of the dissolved oxygen in the aquaculture system or the ammonia in the water or the pH value of the water is measured and the measuring results are used in combination with the analyzed breathing rates for calculating the quantity of feed to be delivered to the aquaculture system.

7. The process according to any one of the preceding claims, **characterized in that** the water quality is estimated by using computer vision, wherein preferably the estimated water quality is used in combination with the analyzed breathing rates for calculating the quantity of feed to be delivered to the aquaculture system.

8. The process according to any one of the preceding claims, **characterized in that** analyzing the behavior of the fish comprises at least one of counting the number of fish in a feeding region of the aquaculture system, determining the velocity of the fish, and determining a mean distance between all fish, wherein an increase of the number of fish in the feeding region and an increase in velocity of the fish and a decrease of the mean distance between all fish is considered as an indication to increase the quantity of feed to be delivered to the aquaculture system, and vice versa.

9. The process according to claim 8, **characterized in that** at least two of the counting the number of fish in a feeding region of the aquaculture system, the determining the velocity of the fish, and the determining a mean distance between all fish are used as a combined indicator for the quantity of feed to be delivered to the aquaculture system, wherein each of said parameters is monitored individually.

10. The process according to any one of the preceding claims, **characterized in that** it is a self-learning process automatically adapting to environment and setup of the aquaculture system based on previously tagged image data of the aquaculture system and/or on previous analyses and classification of the breathing rate of the fish in the aquaculture system and the behavior of the fish before and during the feeding.

11. A feeding device (10) for fish (6, 7) in an aquaculture system (1), comprising at least one digital camera (12, 13), a feed delivery system (20), and a computer unit (11) designed to receive image data of the aquaculture system captured by the camera (12, 13) and to control the feed delivery system (20) to deliver quantity-adjusted feed (22) rations, **characterized in that** the computer unit (11) is adapted to carry out the steps of the process according to any one of the preceding claims.

12. The feeding device according to claim 11, **characterized in that** the digital camera (12, 13) is an underwater camera or a camera placed in a translucent water-tight housing or behind a viewing window (9) of a wall of the aquaculture system.

13. The feeding device according to claim 11 or 12, **characterized in that** the feed delivery system (20) is a pneumatic feed delivery system.

14. The feeding device according to any one of claims 11 to 13, **characterized in that** it comprises at least one sensor (14) for measuring the dissolved oxygen in the aquaculture system or the ammonia in the water or the pH value of the water, wherein the sensor (14) is configured to transmit the measured values to the computer unit (11).

15. An aquaculture system (1), comprising a feeding device (10) according to any one of claims 11 to 14, and a tank (2) filled with water (3) for growing fish (6, 7), wherein the aquaculture system (1) is either a closed system, in which free gas exchange with the environment is prevented, or an open system allowing free gas exchange with the environment.

16. A computer program product, comprising instructions causing the feeding device (10) according to any one of claims 11 to 14 to carry out the process according to any one of claims 1 to 10.

17. A computer readable storage medium on which the computer program product according to claim 16 is stored.

18. A data carrier signal transmitting the computer program of the computer program product according to claim 16.
